# EUROPÄISCHE PATENTSCHRIFT

(11) **EP 0 876 951 B1**
(45) Veröffentlichungstag und Bekanntmachung des Hinweises auf die Patenterteilung: **25.06.2003**
(21) Anmeldenummer: 98105146.9
(22) Anmeldetag: 21.03.1998
(51) Int. Cl.: B62J 9/00, B62J 7/08

(54) **Haltevorrichtung für Taschen**
Device for holding bags
Fixation pour sacoche

(30) Priorität: 09.05.1997 DE 19719212
(43) Veröffentlichungstag der Anmeldung: 11.11.1998
(73) Patentinhaber: vauDe Sport Albrecht von Dewitz, 88069 Tettnang (DE)
(72) Erfinder: Engers, Stefan, Dipl.-Ing., 88069 Tettnang (DE)
(74) Vertreter: Engelhardt, Guido, Dipl.-Ing.

(56) Entgegenhaltungen:
- WO-A-93/25430
- US-A- 4 638 933
- US-A- 5 024 359
- US-A- 5 406 816

## Beschreibung

Die Erfindung bezieht sich auf eine Vorrichtung zur lösbaren Halterung einer Tasche oder dgl. an einer Strebe, beispielsweise an einer Stange eines Gepäckträgers oder einer Lenkstange eines Fahrrades, mit einem mit der Tasche verbindbaren Halteclip und einem an diesem auf der der Tasche abgewandten Seite angebrachten Lasthaken, der die Strebe im oberen Bereich übergreift.

Durch die DE-92 07 525 U1 ist eine Halterung für Taschen an Fahrrädern, Motorrädern oder dgl. bekannt. Der über die Strebe greifende Lasthaken ist hierbei fest mit dem Halteclip und somit mit der Tasche verbunden, so daß, um ein selbsttätiges Lösen der Tasche durch Erschütterungen zu vermeiden, ein zusätzlicher Schnapphaken vorgesehen ist, der drehbar gelagert ist und die Strebe von unten umgreift. Mittels eines an dem Schnapphaken angebrachten Gurtbandes kann dieser entgegen der Kraft einer Schenkelfeder verschwenkt werden, so daß bei verschwenktem Schnapphaken der Lasthaken geöffnet und die Strebe freigegeben ist, die Tasche kann somit abgenommen werden.

Abgesehen davon, daß der Lasthaken an den jeweiligen Durchmesser der Strebe anzupassen ist und demnach mitunter Taschen mit unterschiedlichen Lasthaken bevorratet werden müssen, um den Wünschen der Käufer entsprechen zu können, ist es des weiteren insbesondere beim Befestigen einer mit einer solchen Haltevorrichtung bestückten Tasche von Nachteil, daß dabei der Schnapphaken in geöffnete Stellung zu bringen und durch eine gesonderte Abstützung der Tasche in dieser Stellung zu halten ist, um den Haltehaken an der Strebe einhängen zu können. Dies erschwert die Handhabung und ist oftmals mit Schwierigkeiten verbunden. Und bei gebrochener auf den Schnapphaken einwirkender Schenkelfeder ist eine Verriegelung, da der Schnapphaken nur durch die Kraft dieser Feder arretiert ist, nicht gegeben, die Tasche kann durch die beim Fahren unumgänglichen Erschütterungen von der Strebe gelöst werden.

Aufgabe der Erfindung ist es daher, eine Vorrichtung zur lösbaren Halterung einer Tasche an einer Strebe der vorgenannten Art zu schaffen, die nicht nur äußerst einfach in ihrer konstuktiven Ausgestaltung und somit wirtschaftlich zu fertigen ist, sondern die auch einfach zu handhaben ist, bei der vor allem zuverlässig gewährleistet ist, daß die Tasche sich nicht von selbst von der Strebe lösen kann. Die Haltevorrichtung soll sich nämlich nicht von selbst öffnen können, sondern durch das Eigengewicht der Tasche gesichert werden, und die Befestigung einer Tasche soll ohne Schwierigkeiten und in kurzer Zeit zu bewerkstelligen sein.

Gemäß der Erfindung wird dies bei einer Vorrichtung zur lösbaren Halterung einer Tasche oder dgl. an einer Strebe der eingangs genannten Gattung dadurch erreicht, daß der Lasthaken um eine parallel oder senkrecht zur Strebe und vertikal über dieser angeordneten Achse verschwenkbar an dem Halteclip angelenkt und mittels eines Zuggliedes entgegen der Kraft einer an diesem abgestützten Feder und/oder der Gewichstskraft der Tasche vorzugsweise begrenzt ausschwenkbar gelagert ist.

Zweckmäßig ist es hierbei, wenn der Lasthaken im oberen Bereich mindestens eine Anlagefläche zur Abstützung an der Strebe aufweist und der der Anlagefläche des Lasthakens gegenüberliegend angeordnete Bereich des Halteclips als etwa horizontal verlaufende Stützfläche ausgebildet ist, wobei der Abstand zwischen der Anlagefläche des Lasthakens und der Stützfläche des Halteclips gleich oder geringfügig größer bemessen sein sollte als die Höhe der Strebe.

Der Lasthaken kann mittels eines etwa mittig zur Strepe und parallel zu dieser in den Halteclip eingesetzten Bolzens gelenkig mit diesem verbunden sein, es ist aber auch möglich, den Bolzen, auf dem der Lasthaken verschwenkbar gelagert ist, auf der der Tasche abgewandten Seite in dem Halteclip etwa in Höhe der Strebe anzuordnen.

Zur Begrenzung der Schwenkbewegungen des Lasthakens ist es angebracht, dessen der Tasche abgwandten Schenkel und/oder dessen der Tasche zugekehrten Schenkel als mit der Stirnfläche des Halteclips bzw. dessen Stützfläche zusammenwirkende Anschläge auszubilden.

Der Lasthaken kann in einer in den Halteclip eingearbeiteten ein- oder beidseitig durch Schenkel begrenzten Freisparung verschwenkbar angeordnet sein.

Vorteilhaft ist es des weiteren, die auf den Lasthaken einwirkende Feder als Schenkelfeder auszubilden, die ein- oder beidseitig des Lasthakens zwischen diesem und dem Halteclip auf dem diese durchgreifenden Bolzen angeordnet und mit jeweils einem Schenkel an dem Halteclip und an dem Lasthaken mittels in diese eingreifender Ansätze abgestützt ist, und das z. B. aus einem Band bestehende Zugglied auf der der Tasche abgewandten Seite im äußeren Bereich des Lasthakens an diesem anzulenken.

Der Lasthaken kann einen U-förmig ausgebildeten Querschnitt mit zwei etwa gleich lang bemessenen und parallel zueinander angeordneten Schenkel aufweisen, es ist aber auch möglich, den Lasthaken als zweischenkeliges Winkelstück auszubilden, dessen der Strebe zugekehrte Innenfläche als Anlagefläche an deren Außenmantelfläche angepaßt ist.

Nach einer Weiterbildung ist vorgesehen, daß der Lasthaken in Schließstellung verriegelbar ist.

Dies kann in der Weise bewerkstelligt werden, daß der Lasthaken mittels eines verschwenkbar an dem Halteclip gelagerten Rasthakens oder einer Klinke, der einen der Schenkel des Lasthakens hintergreift, verriegelbar ist und daß der Rasthaken oder die Klinke mit Hilfe eines an diesen angelenkten Zuggliedes verstellbar sind, es ist aber auch möglich, den Lasthaken mit Hilfe eines Schiebers, der entgegen der Kraft einer Feder in dem Halteclip verstellbar geführt ist und in eine in den Lasthaken eingearbeitete Nut eingreift, zu verriegeln.

Nach einer Ausführungsvarianten ist ferner vorgesehen, den Lasthaken durch eine verdrehbar an dem Halteclip gelagerte Platte zu bilden, die mittels des Zuggliedes um einen senkrecht zur Strebe angeordneten Bolzen verschwenkbar ist und zwei Rastvorsprünge, die die Strebe hintergreifen, aufweist.

Angebracht ist es hierbei, die Platte auf der dem Halteclip zugekehrten Stirnseite mit mindestens einem Ansatz, z. B. in Form eines Stiftes, zu versehen, der in eine in den Halteclip eingearbeitete konzentrisch zu der Schwenkachse verlaufenden Führungsnut eingreift.

Wird eine Vorrichtung zur lösbaren Halterung einer Tasche gemäß der Erfindung ausgebildet, so ist es auf sehr einfache Weise in kurzer Zeit möglich, eine mit dieser Haltevorrichtung ausgestattete Tasche an einer Strebe zu befestigen. Dazu ist lediglich der Lasthaken mittels des angelenkten Gurtbandes zu verschwenken bzw. dessen Verriegelung ist zu lösen, so daß dieser durch die Kraft der Feder selbstätig verschwenkt wird, um den Lasthaken an einer Strebe einhängen zu können. Und durch die Gesichtskraft der Tasche und/oder die Kraft der auf den Lasthaken einwirkenden Feder wird diese demnach derart verdreht, daß im Zusammenwirken mit dem Halteclip ein unbeabsichtigtes selbsttätiges Lösen nahezu ausgeschlossen ist. Die vorschlagsgemäß ausgebildete Haltevorrichtung weist demnach nur wenige Bauteile auf, ist störunempfindlich und leicht zu handhaben, so daß eine vielseitige vorteilhafte Verwendbarkeit gegeben ist.

In der Zeichnung sind mehrere Ausführungsbeispiele der gemäß der Erfindung ausgebildeten Vorrichtung zur lösbaren Halterung einer Tasche dargestellt, die nachfolgend im einzelnen erläutert sind. Hierbei zeigt:
- Figur 1: die an einer Tasche angebrachte Haltevorrichtung in Ansicht,
- Figur 2: einen Schnitt nach der Linie II - II der Figur 1,
- Figur 3: die Haltevorrichtung nach Figur 2 mit geöffnetem Lasthaken,
- Figur 4: einen Ausschnitt aus Figur 1, in einer vergrößerten Darstellung,
- Figuren 5 bis 8: zwei Ausführungsvarianten des Lasthakens der Haltevorrichtung nach Figur 1, in Darstellungen nach den Figuren 2 und 3,
- Figuren 9 bis 14: mittels unterschiedlich ausgebildeter Riegelglieder arretierbare Lasthaken, in Darstellungen nach den Figuren 2 und 3,
- Figur 15 und 16: einen in einem Adapter angeordneten verriegelbaren Lasthaken in zwei Betriebsstellungen und
- Figur 17 und 18: eine weitere Ausführungsvariante der Haltevorrichtung mit einem durch eine verschwenkbare Platte gebildeten Lasthaken, in zwei Betriebsstellungen.

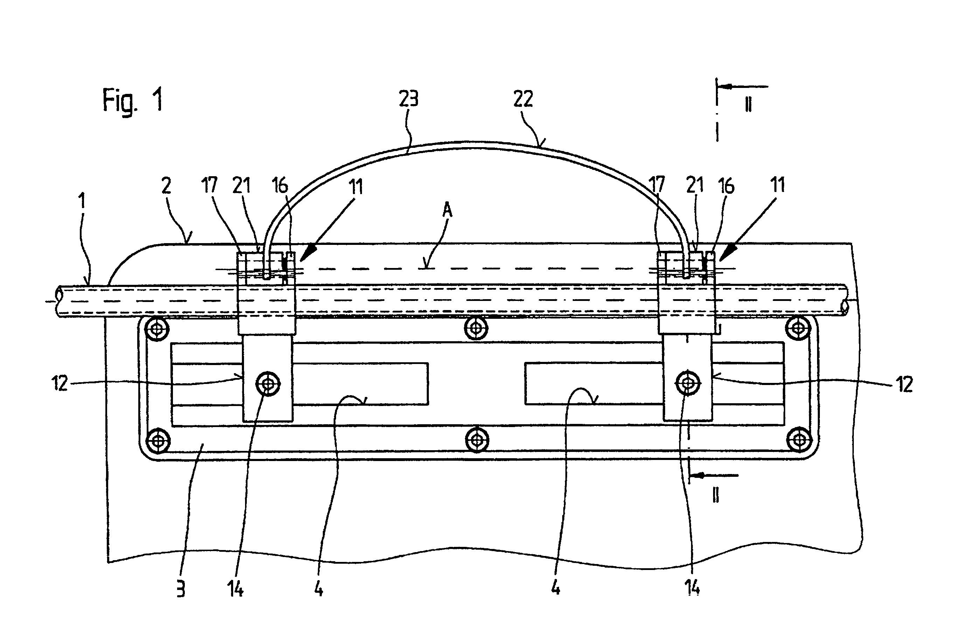

Die in den Figuren 1 bis 3 dargestellte und jeweils mit 11 bezeichnete Vorrichtung dient zur lösbaren Befestigung einer Tasche 2 an einer Strebe 1, z.B. einer Stange eines Gepäckträgers eines Fahrrades, und besteht im wesentlichen aus zwei an der Tasche 2 angebrachten Halteclips 12 und jeweils einem mit diesen verschwenkbar verbundenen Lasthaken 21, die die Strebe 1 im oberen Bereich übergreifen. Um eine seitliche Verstellung und somit eine Anpassung an unterschiedliche Gegebenheiten vornehmen zu können, sind die beiden Halteclips 12 in einer mit Nuten 4 versehenen Schiene 3 verstellbar geführt, die an der Tasche 2 angenietet ist. Mit Hilfe von Schrauben 14, die in den Halteclips 12 eingearbeitete Bohrungen 13 durchgreifen und mit an der Schiene 3 abgestützten Muttern 15 zusammenwirken, sind die Halteclips 12 jeweils an der Schiene 3 gehalten.

Der Halteclip 12 ist bei der Ausgestaltung nach den Figuren 1 bis 3 im Bereich des Lasthakens 21 gabelförmig ausgestaltet und weist somit zwei Schenkel 16 und 17 auf, die eine Freisparung 18, in die der Halteclip 21 eingesetzt ist, begrenzen. Mit Hilfe eines in in den Schenkeln 16 und 17 vorgesehenen Bohrungen 19 eingesetzten Bolzens 24, der etwa vertikal über der Strebe 1 angeordnet ist und den mit einer Bohrung 25 ausgestatteten Lasthaken 21 durchgreift, ist dieser verschwenkbar gelagert.

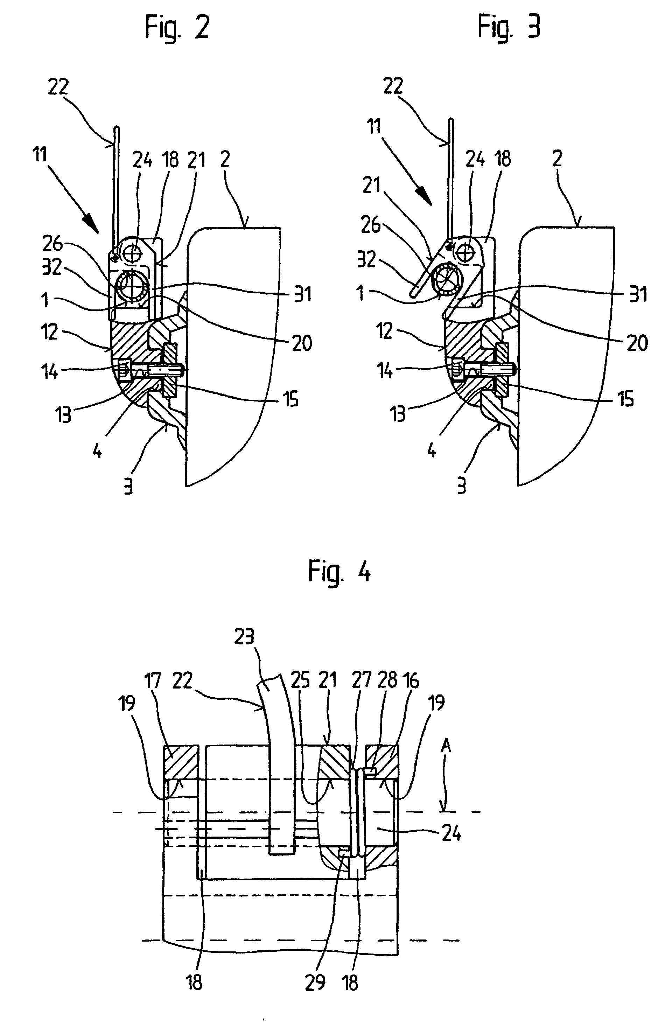

Der Lasthaken 21 ist bei dem Ausführungsbeispiel nach den Figuren 1 bis 3 im Querschnitt U-förmig gestaltet und nimmt zwischen den beiden parallel zueinander verlaufenden Schenkeln 31 und 32 die Strebe 1 auf. Die Fläche zwischen den Schenkel 31 und 32 ist als Anlagefläche 26 für die Strebe 1 ausgebildet, der gegenüberliegende Bereich des Halteclips 12 als Stützfläche 20. Außerdem ist der Abstand zwischen der Anlagaefläche 26 und der Stützfläche 20 entsprechend dem Durchmesser der Strebe 1 gewählt, so daß diese, wie dies in Figur 2 gezeigt ist, bei geschlossenem Halteclip 21 arretiert ist.

Auf den Bolzen 24 ist gemäß Figur 4 des weiteren zwischen dem Schenkel 16 des Halteclips 12 und dem Lasthaken 21 eine als Schenkelfeder ausgebildete Feder 27 angeordnet, die mit ihren Schenkeln 28 und 29 an dem Schenkel 16 des Halteclips 12 und an dem Lasthaken 21 abgestützt ist. Der Lasthaken 21 ist demnach nur gegen die Kraft der Feder 27 verdrehbar.

Eine Verdrehung des Lasthakens 21 kann jedoch mit Hilfe eines an diesem angelenkten als Gurtband 23 ausgebildeten Zuggliedes 22 bewerkstelligt werden. Wird, wie dies in Figur 3 gezeigt ist, mittels des exzentrisch angenkten Zuggliedes 22 auf den Lasthaken 21 ein Drehmoment ausgeübt, so wird der Lasthaken 21 um die Achse A verdreht, so daß der Lasthaken 21 geöffnet wird und die Tasche 2 von der Strebe 1 abgenommen werden kann. Beim Einhängen der Tasche 2 wird diese lediglich am Zugglied 22 gehalten, so daß der Lasthaken 21 durch die Gewichtskraft der Tasche 2 geöffnet wird und der Halteclip 21 in die Strebe eingehängt werden kann. Auch mit Hilfe eines an der Tasche 2 angebrachten nicht dargestellten Hakens kann die Tasche an einer Stange eines Gepäckträgers arretiert werden, um den Lasthaken 21 ausschwenken und somit an der Strebe 1 einhängen zu können.

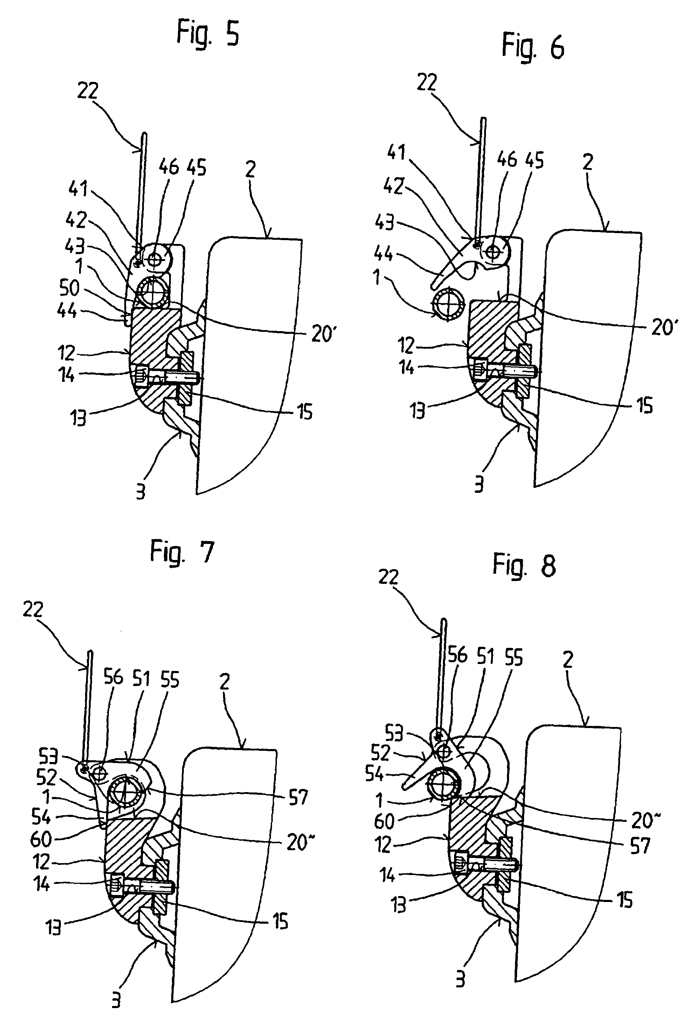

Bei dem in den Figuren 5 und 6 gezeigten Ausführungsbeispiel ist der Lasthaken 41 durch ein Winkelstück 42 gebildet, das mittels des Zuggliedes 22 um einen in den Halteclip 12 eingesetzten vertikal über der Strebe 1 angeordneten Bolzen 46 verschwenkbar ist. Der Schenkel 44 des Lasthakens 42 liegt durch die Kraft einer nicht dargestellten auf den Lasthaken 41 einwirkenden Feder an einer an dem Halteclip 12 vorgesehenen Anschlagfläche 50 an, der Schenkel 45 nimmt den Bolzen 46 auf. Der Bereich zwischen den beiden Schenkeln 44 und 45 ist dazu als Anlagefläche 43 für die Strebe 1 ausgebildet. Entgegen der Kraft der auf dem Bolzen 46 angeordneten Feder kann gemäß Figur 6 der Lasthaken 41 verschwenkt werden, um den Halteclip 12 an der Strebe 1 einzuhängen oder die Tasche 2 abnehmen zu können. Der Abstand zwischen der Anlagefläche 43 und der an dem Halteclip 12 vorgesehenen Stützfläche 20' ist entsprechend dem Durchmesser der Strebe 1 gewählt, so daß diese bei geschlossenem Lasthaken 41 arretiert ist.

In etwa gleicher Weise ist der in den Figuren 7 und 8 gezeigte Lasthaken 51 ausgebildet. Der zur verdrehbaren Lagerung des Lasthakens 51 entgegen der Kraft einer auf diesen einwirkenden nicht dargestellten Feder - die Feder kann aber auch entfallen - vorgesehene Bolzen 56 ist hierbei seitlich neben der Strebe 1 in dem Schenkel 54 des Winkelstückes 52 angeordnet und die Innenmantelfläche des Schenkels 55 ist als Anlagefläche 53 für die Strebe 1 ausgebildet. Bei geöffnetem Lasthaken 51 wirken der Schenkel 55 mit seinem als Anschlag 57 gestalteten Ende mit der an dem Halteclip 12 vorgesehenen Stützflächen 20'', bei geschlossenem Lasthaken 51 dagegen der Schenkel 54 mit der an dem Halteclip 12 vorgesehenen Anschlagfläche 60 zusammen, so daß der Lasthaken 51 in beiden Endlagen fixiert ist.

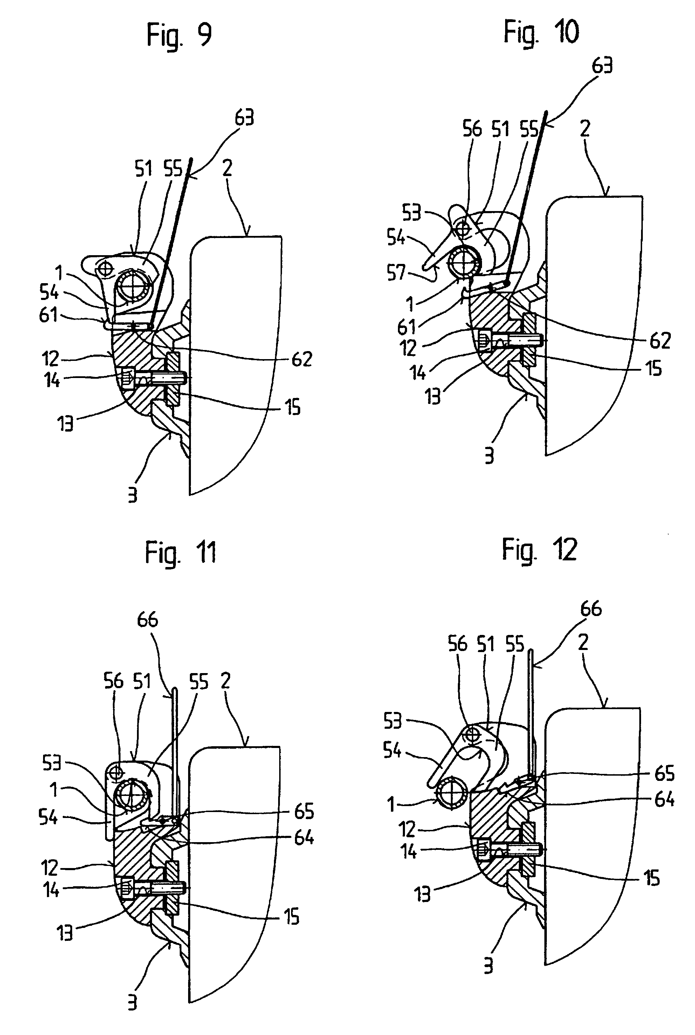

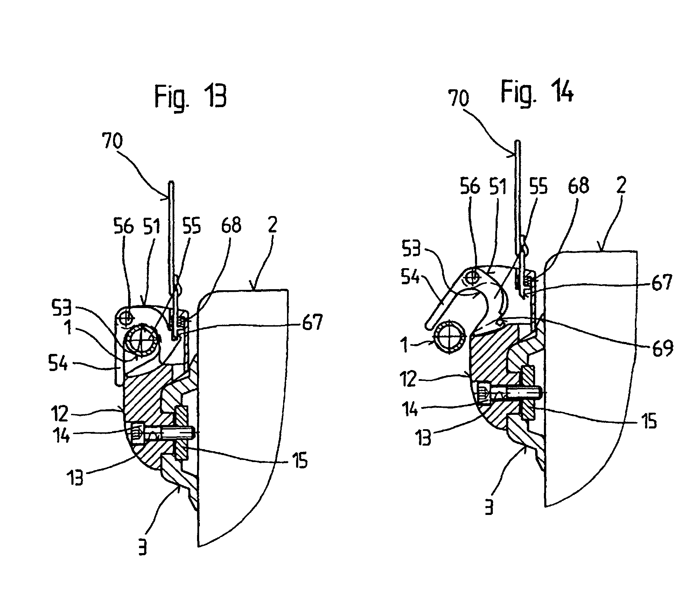

Bei den Ausführungsvarianten nach den Figuren 9 bis 14 ist der Lasthaken 51 bei auf der Strebe 1 aufgehängter Tasche 2 in unterschiedlicher Weise verriegelbar. Gemäß den Figuren 9 und 10 dient dazu ein um einen Bolzen 62 verschwenkbar in dem Halteclip 12 gelagerter Rasthaken 61, der mittels eines an diesem angelenkten Zuggliedes 63 verschwenkbar ist und mit dem Schenkel 54 des Lasthakens 51 zusammenwirkt. Nach den Figuren 11 und 12 ist zu dem gleichen Zweck eine Klinke 64 vorgesehen, die ebenfalls mit Hilfe eines Zuggliedes 66 um einen Bolzen 65 verschwenkt werden kann. Die Klinke 64 wirkt hierbei mit dem Schenkel 55 des Lasthakens 51 zusammen. Und gemäß den Figuren 13 und 14 wird der Lasthaken 51 durch einen Schieber 67 verriegelt, der in eine in den Lasthaken 51 eingearbeitete Nut 69 eingreift und mit Hilfe eines Zuggliedes 70 entgegen der Kraft einer Feder 68 zum Lösen der Verriegelung verstellbar ist.

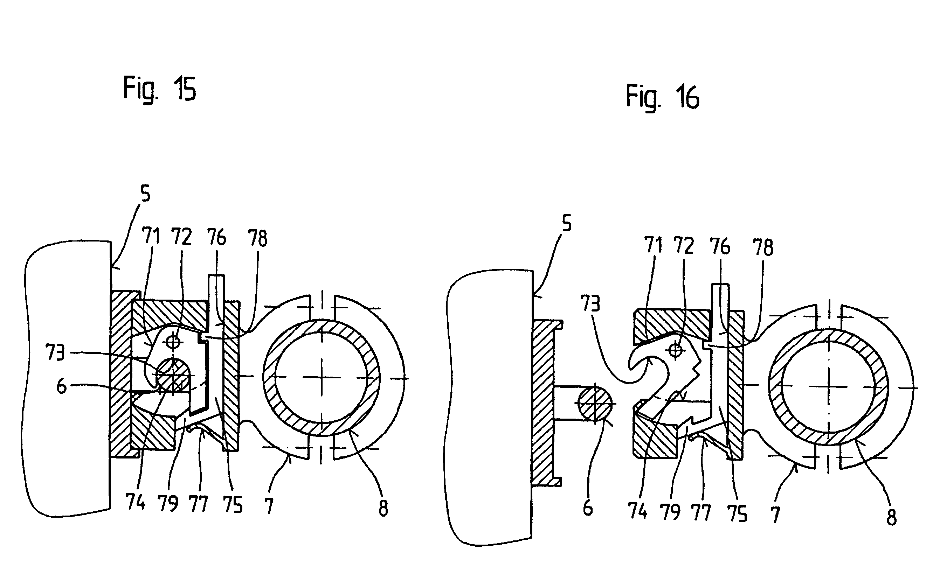

Bei dem Ausführungsbeispiel nach den Figuren 15 und 16 ist ein ebenfalls verriegelbarer Lasthaken 71 in einem Adapter 7 als Halteclip eingebaut, der z.B. an einer vertikal verlaufenden Stange 8 zu befestigen ist, um an dieser eine mit einem Beschlag 6 versehene Satteltasche 5 befestigen zu können. Der Lasthaken 71 ist hierbei um einen Bolzen 72 verschwenkbar in dem Adapter 7 gelagert und mittels eines Schiebers 75 verriegelbar. Der in einer Nut 76 geführte und entgegen der Kraft einer Blattfeder 77 betätigbare Schieber 75 weist dazu einen Mitnehmer 78 und eine Klinke 79 auf, die mit dem Lasthaken 71 zusammenwirken.

An dem Lasthaken 71 ist wiederum eine auf dem Bolzen 72 angeordnete nicht dargestellte Feder abgestützt, so daß durch Einschieben des Beschlages 6 in den Lasthaken 71 und durch Andrücken gegen die Anlagefläche 73, der eine an dem Adapter 7 vorgesehene Stützfläche 74 zugeordnet ist, der Lasthaken 71 verschwenkt und dabei der Riegel 75 entgegen der Kraft der Feder 77 derart verstellt wird, daß der Lasthaken 71 in der Klinke 79 einrastet. Wird dagegen auf den Riegel 71 Druck ausgeübt, so wird der Lasthaken 71 freigegeben und die Tasche 5 kann von dem Adapter 7 abgenommen oder in den Lasthaken 71 eingehängt werden.

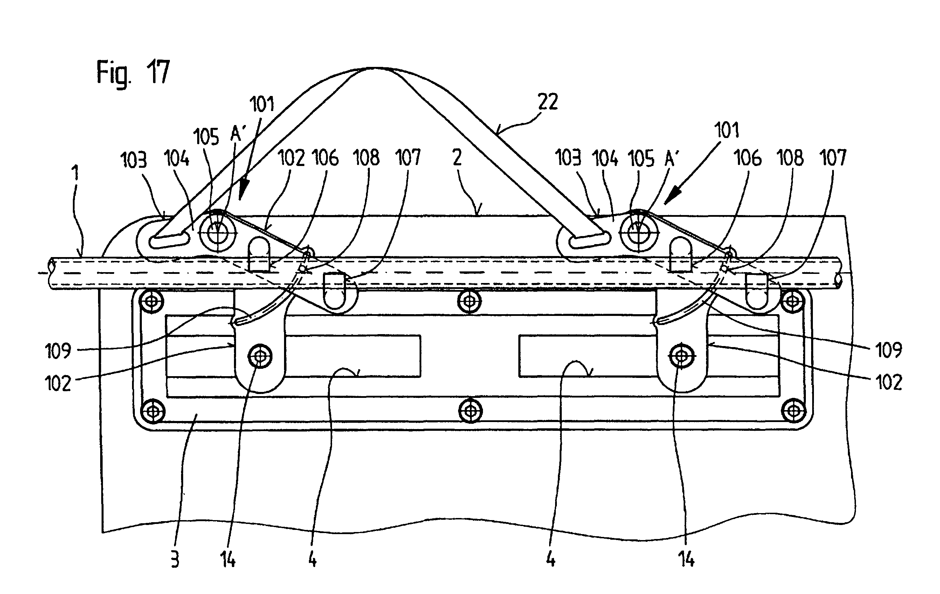

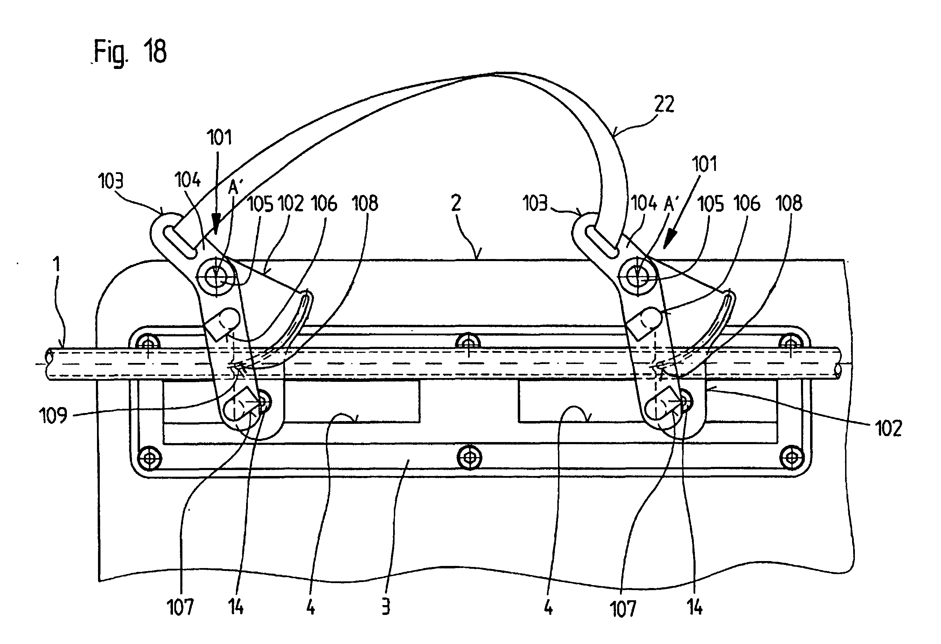

Bei der in den Figuren 17 und 18 dargestellten und mit 101 bezeichneten Vorrichtung zur lösbaren Halterung der Tasche 2 an der Strebe 1 sind die beiden diese übergreifenden Lasthaken 103 jeweils um eine Achse A' verschwenkbar an dem Halteclip 102 befestigt, die achssenkrecht zu der Strebe 1 verläuft. Die Lasthaken 103 sind hierbei durch Platten 104 gebildet, die auf in die Halteclips 102 eingesetzte Bolzen 105 verdrehbar sind. Außerdem sind in die Platten 109 jeweils zwei mit seitlichem Abstand zueinander angeordnete Rastvorsprunge 106 und 107 befestigt, die die Strebe 1 übergreifen können. Und mittels abstehender Stifte 108 sind die Platten 104 in konzentrisch zu den Bolzen 105 in die Halteclips 102 eingearbeitete Nuten 107 zusätzlich geführt.

Wird die Tasche 2 mittels des Zuggliedes 22 angehoben, so werden die beiden die Lasthaken 103 bildenden Platten 105 gemäß der Darstellung in Figur 18 verdreht, so daß die Strebe 1 zwischen die Rastvorsprünge 106 und 107 eingeführt werden kann. Wird sodann keine Zugkraft mehr auf das Zugglied 22 ausgeübt, wird durch das Gewicht der Tasche 2 diese nach unten gezogen und die Lasthaken 103 werden derart verdreht, daß die Rastvorsprünge 106 die Strebe 1 von oben und die Rastvorsprünge 107 diese von unten umgreifen. Eine sichere Arretierung der Tasche 2 an der Strebe 1 ist somit auch bei dieser Ausgestaltung gewährleistet.

## Patentansprüche

1. Vorrichtung (11; 101) zur lösbaren Halterung einer Tasche (2) oder dgl. an einer Strebe (1), beispielsweise an einer Stange eines Gepäckträgers oder einer Lenkstange eines Fahrrades, mit einem mit der Tasche (2) verbindbaren Halteclip (12; 102) und einem an diesem auf der der Tasche (2) abgewandten Seite angebrachten Lasthaken (21; 41; 51; 71; 103) der die Strebe (1) im oberen Bereich übergreift,
**dadurch gekennzeichnet,**
**daß** der Lasthaken (21; 103) um eine parallel oder senkrecht zur Strebe (1) und vertikal über dieser angeordneten Achse (A; A') verschwenkbar an dem Halteclip (12; 102) angelenkt und mittels eines Zuggliedes (22) entgegen der Kraft einer an dem Lasthaken (21; 41; 51; 71; 103) abgestützten Feder (27) und/oder der Gewichtskraft der Tasche (2), vorzugsweise begrenzt, ausschwenkbar gelagert ist.

2. Haltevorrichtung nach Anspruch 1,
**dadurch gekennzeichnet,**
**daß** der Lasthaken (21; 41; 51; 71) im oberen Bereich mindestens eine Anlagefläche (26; 43; 53; 73) zur Abstützung an der Strebe (1) aufweist.

3. Haltevorrichtung nach Anspruch 1 oder 2,
**dadurch gekennzeichnet,**
**daß** der der Anlagefläche (26; 43; 53; 73) des Lasthakens (21; 41; 51; 71) gegenüberliegend angeordnete Bereich des Halteclips (12 bzw. 7) als etwa horizontal verlaufende Stützfläche (20; 74) ausgebildet ist.

4. Haltevorrichtung nach Anspruch 3,
**dadurch gekennzeichnet,**
**daß** der Abstand zwischen der Anlagefläche (26; 43; 53; 73) des Lasthakens (21; 41; 51; 71) und der Stützfläche (20; 74) des Halteclips (12; 7) gleich oder geringfügig größer bemessen ist als die Höhe der Strebe (1).

5. Haltevorrichtung nach einem oder mehreren der Ansprüche 1 bis 4,
**dadurch gekennzeichnet,**
**daß** der Lasthaken (21; 41; 71) mittels eines etwa mittig zur Strebe (1; 6) und parallel zu dieser in den Halteclip (12; 7) eingesetzten Bolzens (24; 46; 72) gelenkig mit diesem verbunden ist.

6. Haltevorrichtung nach einem oder mehreren der Ansprüche 1 bis 4,
**dadurch gekennzeichnet,**
**daß** der Bolzen (56) auf der der Lasthaken (51) verschwenkbar gelagert ist, auf der der Tasche (2) abgewandten Seite in dem Halteclip (12) etwa in Höhe der Strebe (1) angeordnet ist.

7. Haltevorrichtung nach einem oder mehreren der Ansprüche 1 bis 6,
**dadurch gekennzeichnet,**
**daß** zur Begrenzung der Schwenkbewegungen des Lasthakens (21; 41; 51) dessen der Tasche (2) abgewandter Schenkel (32; 44; 54) und/oder dessen der Tasche (2) zugeordneter Schenkel (55) als mit der Stirnfläche des Halteclips (12) bzw. dessen Stützfläche (20) zusammenwirkende Anschläge (57) ausgebildet sind.

8. Haltevorrichtung nach einem oder mehreren der Ansprüche 1 bis 7,
**dadurch gekennzeichnet,**
**daß** der Lasthaken (21) in einer in den Halteclip (12) eingearbeiteten ein- oder beidseitig durch Schenkel (16, 17) begrenzten Freisparung (18) verschwenkbar angeordnet ist.

9. Haltevorrichtung nach einem oder mehreren der Ansprüche 1 bis 8,
**dadurch gekennzeichnet,**
**daß** die auf den Lasthaken (21) einwirkende Feder (27) als Schenkelfeder ausgebildet ist, die ein- oder beidseitig des Lasthakens (21) zwischen diesem und dem Halteclip (12) auf dem diese durchgreifenden Bolzen (24) angeordnet und mit jeweils einem Schenkel (28, 29) an dem Halteclip (12) und an dem Lasthaken (21) mittels in diese eingreifende Ansätze abgestützt ist.

10. Haltevorrichtung nach einem oder mehreren der Ansprüche 1 bis 9,
**dadurch gekennzeichnet,**
**daß** das z.B. aus einem Band (23) bestehende Zugglied (22) auf der der Tasche (2) abgewandten Seite im äußeren Bereich des Lasthakens (21; 41; 51) an diesem angelenkt ist.

11. Haltevorrichtung nach einem oder mehreren der Ansprüche 1 bis 10,
**dadurch gekennzeichnet,**
**daß** der Lasthaken (21) einen U-förmig ausgebildeten Querschnitt mit zwei etwa gleich lang bemessenen und parallel zueinander angeordneten Schenkel (31, 32) aufweist.

12. Haltevorrichtung nach einem oder mehreren der Ansprüche 1 bis 10,
**dadurch gekennzeichnet,**
**daß** der Lasthaken (41; 51) als zweischenkeliges Winkelstück (42; 52) ausgebildet ist, dessen der Strebe (1) zugekehrte Innenfläche als Anlagefläche (43; 53) an deren Außenmantelfläche angepaßt ist.

13. Haltevorrichtung nach Anspruch 12,
**dadurch gekennzeichnet,**
**daß** der Lasthaken (51) in Schließstellung verriegelbar ist.

14. Haltevorrichtung nach Anspruch 13,
**dadurch gekennzeichnet,**
**daß** der Lasthaken (51) mittels eines verschwenkbar in dem Halteclip (12) gelagerten Rasthakens (61) oder einer Klinke (64), der einen der Schenkel (54 bzw. 55) des Lasthakens (51) hintergreift, verriegelbar ist und daß der Rasthaken (61) oder die Klinke (64) mit Hilfe eines an diesen angelenkten Zuggliedes (63 bzw. 66) verstellbar sind.

15. Haltevorrichtung nach Anspruch 13,
**dadurch gekennzeichnet,**
**daß** der Lasthaken (51) mit Hilfe eines Schiebers (67), der entgegen der Kraft einer Feder (68) in dem Halteclip (12) verstellbar geführt ist und in eine in den Lasthaken (51) eingearbeitete Nut (69) eingreift, verriegelbar ist.

16. Haltevorrichtung nach einem oder mehreren der Ansprüche 1 bis 3,
**dadurch gekennzeichnet,**
**daß** der Lasthaken (103) durch eine verdrehbar an dem Halteclip (102) gelagerte Platte (104) gebildet ist, die mittels des Zuggliedes (22) um einen senkrecht zur Strebe (1) angeordneten Bolzen (105) verschwenkbar ist und zwei Rastvorsprünge (106, 107), die die Strebe (1) hintergreifen, aufweisen.

17. Haltevorrichtung nach Anspruch 16,
**dadurch gekenzeichnet,**
daß die Platte (104) auf der dem Halteclip (102) zugekehrten Stirnseite mit mindestens einem Ansatz (108), z. B. in Form eines Stiftes, versehen ist, der in eine in den Halteclip (102) eingearbeitete konzentrisch zu der Schwenkachse (A') verlaufenden Führungsnut (109) eingreift.

## Claims

1. A device (11; 101) for holding a bag (2) or the like in a releasable connection onto a strut (1), for example onto a rod of a luggage rack or the handlebars of a bicycle, with a retaining clip (12; 102) which can be connected to the bag (2) and a load hook (21; 41; 51; 71; 103) attached to the retaining clip (12; 102), the aforementioned load hook (21; 41; 51; 71; 103) being located on the side facing away from the bag (2) and reaching over the strut (1) in the upper area,
**characterised in that,**
the load hook (21; 103) is articulated on the retaining clip (12; 102) about an axis (A; A') which is located parallel or perpendicular to the strut (1) and vertically above it and is held in a swivelling mounting by means of a tension element (22) against the force of a spring (27) braced against the load hook (21; 41; 51; 71; 103) and/or against the weight of the bag (2), with the swivelling movement being restricted in a preferred embodiment.

2. The holding device in accordance with Claim 1,
**characterised in that,**
the load hook (21; 41; 51; 71) has at least one contact surface (26; 43; 53; 73) in its upper area to provide support against the strut (1).

3. The holding device in accordance with Claim 1 or 2,
**characterised in that**,
the area of the retaining clip (12 or 7) arranged opposite to the contact surface (26; 43; 53; 73) of the load hook (21; 41; 51; 71) is formed as an approximately horizontal support surface (20; 74).

4. The holding device in accordance with Claim 3,
**characterised in that**,
the distance between the contact surface (26; 43; 53; 73) of the load hook (21; 41; 51; 71) and the support surface (20; 74) of the retaining clip (12; 7) is the same as or slightly larger than the height of the strut (1).

5. The holding device in accordance with one or more of Claims 1 to 4,
**characterised in that**,
the load hook (21; 41; 71) is connected to the retaining clip (12; 7) in an articulated connection by means of a pin (24; 46; 72) located approximately centrally in relation to the strut (1; 6), parallel to the strut (1; 6) and inserted in the retaining clip (12; 7).

6. The holding device in accordance with one or more of Claims 1 to 4,
**characterised in that,**
the pin (56) upon which the load hook (51) is mounted in a swivelling connection is arranged in the retaining clip (12) on the side opposite to the bag (2) and approximately at the level of the strut (1).

7. The holding device in accordance with one or more of Claims 1 to 6,
**characterised in that**,
in order to limit the swivelling movements of the load hook (21; 41; 51), the leg (32; 44; 54) of the load hook (21; 41; 51) facing away from the bag (2) and/or the leg (55) of the load hook (21; 41; 51) facing towards the bag (2) are formed as stops (57) interacting with the end of the retaining clip (12) or with the support surface (20) of the retaining clip (12).

8. The holding device in accordance with one or more of Claims 1 to 7,
**characterised in that,**
the load hook (21) is arranged in a swivelling mounting in an opening (18) worked in the retaining clip (12) and restricted on one or both sides by legs (16, 17).

9. The holding device in accordance with one or more of Claims 1 to 8,
**characterised in that,**
the spring (27) acting on the load hook (21) is embodied as a leg spring arranged on one or both sides of the load hook (21) between the load hook (21) and the retaining clip (12) on the pin (24) which passes through the spring (27), the latter being braced with one leg (28, 29) against the retaining clip (12) and the other against the load hook (21) by means of projection worked into them.

10. The holding device in accordance with one or more of Claims 1 to 9,
**characterised in that**,
the tension element (22), which in a sample embodiment consists of a belt (23), is articulated on the load hook (21; 41; 51) in the outer area of the load hook (21; 41; 51) on the side opposite the bag (2).

11. The holding device in accordance with one or more of Claims 1 to 10,
**characterised in that**,
the load hook (21) has a U-shaped cross-section with two legs (31, 32) of approximately the same length and arranged in parallel to one another.

12. The holding device in accordance with one or more of Claims 1 to 10,
**characterised in that**,
the load hook (41; 51) is formed as a two-legged angle piece (42; 52), the inside surface of which facing the strut (1) is adapted as a contact surface (43; 53) for the outside surface of the strut (1).

13. The holding device in accordance with Claim 12,
**characterised in that**,
the load hook (51) can be locked in its closed position.

14. The holding device in accordance with Claim 13,
**characterised in that,**
the load hook (51) can be locked by means of a detent hook (61) or a latch (64) located in a swivelling mounting in the retaining clip (12), with, in the case of the latch (64), one of the legs (54 or 55) of the load hook (51) reaching behind the latch (64), and that the detent hook (61) or the latch (64) can be adjusted by means of a tension element (63 or 66) arranged on them.

15. The holding device in accordance with Claim 13,
**characterised in that,**
the load hook (51) can be locked by means of a slider (67) which is adjustably guided in the retaining clip (12) against the force of a spring (68) and which engages in a groove (69) worked into the load hook (51).

16. The holding device in accordance with one or more of Claims 1 to 3,
**characterised in that,**
the load hook (103) is formed by a plate (104) in a rotating mounting on the retaining clip (102), with the plate (104) swivelling about a pin (105) by means of the tension element (22), the pin (105) being arranged perpendicular to the strut (1) and the plate (104) having two detent projections (106, 107) which reach behind the strut (1).

17. The holding device in accordance with Claim 16,
**characterised in that**,
the end of the plate (104) facing towards the retaining clip (102) has at least one projection (108), for example embodied in the form of a peg which engages in a guide groove (109) worked into the retaining clip (102) and running concentrically to the axis of rotation (A').

## Revendications

1. Dispositif (11; 101) pour l'accroche détachable d'un sac (2) ou d'un objet similaire sur une barre (1), par exemple une barre d'un porte-bagages ou d'un guidon de vélo, au moyen d'un clip de retenue (12; 102) qui se laisse raccorder au sac (2), et d'un crochet (21; 41; 51; 71; 103) prévu sur celui-ci sur le côté éloigné du sac (2), crochet qui va au-dessus de la partie supérieure de la barre (1),
**caractérisé en ce que**
le crochet (21; 103) est articulé sur le clip de retenue (12; 102) autour d'un axe (A; A') prévu parallèlement ou perpendiculairement par rapport à la barre (1) et verticalement au-dessus de celle-ci, et qu'il est logé articulé, de préférence entre certaines limites, au moyen d'un élément de traction (22), contre la force d'un ressort (27) appuyé sur le crochet (21; 41; 51; 71; 103) et/ou contre le poids du sac (2).

2. Dispositif d'accroche d'après la revendication 1,
**caractérisé en ce que**
le crochet (21; 41; 51; 71) comporte sur sa partie supérieure au moins une surface de portée (26; 43; 53; 73) servant à l'appui de la barre (1).

3. Dispositif d'accroche d'après la revendication 1 ou 2,
**caractérisé en ce que**
l'endroit du clip de retenue (12 ou 7) se trouvant en face de la surface de portée (26; 43; 53; 73) du crochet (21; 41; 51; 71) est conçu sous la forme d'une surface d'appui (20; 74) à peu près horizontale.

4. Dispositif d'accroche d'après la revendication 3,
**caractérisé en ce que**
l'écartement entre la surface de portée (26; 43; 53; 73) du crochet (21; 41; 51; 71) et la surface d'appui (20; 74) du clip de retenue (12; 7) est égal ou légèrement plus grand que la hauteur de la barre (1).

5. Dispositif d'accroche d'après une ou plusieurs des revendications 1 à 4,
**caractérisé en ce que**
le crochet (21; 41; 71) est articulé sur le clip de retenue (12; 7) au moyen d'un boulon (24; 46; 72) prévu dans le clip de retenue (12; 7) à peu près au milieu de la barre (1; 6) et parallèlement à celle-ci.

6. Dispositif d'accroche d'après une ou plusieurs des revendications 1 à 4,
**caractérisé en ce que**
le boulon (56) sur lequel le crochet (51) est articulé, est prévu dans le clip de retenue (12), sur le côté éloigné du sac (2), à peu près au niveau de la barre (1).

7. Dispositif d'accroche d'après une ou plusieurs des revendications 1 à 6,
**caractérisé en ce que**
pour limiter la course de pivotement du crochet (21; 41; 51), son bras (32; 44; 54) éloigné du sac (2) et/ou son bras (55) assigné au sac (2) est conçu/sont conçus sous la forme de butées (57) collaborant avec la face frontale du clip de retenue (12) ou avec sa surface d'appui (20).

8. Dispositif d'accroche d'après une ou plusieurs des revendications 1 à 7,
**caractérisé en ce que**
le crochet (21) est articulé dans un évidement (18) pratiqué dans le clip de retenue (12) et limité d'un côté ou des deux côtés par des bras (16, 17).

9. Dispositif d'accroche d'après une ou plusieurs des revendications 1 à 8,
**caractérisé en ce que**
le ressort (27) agissant sur le crochet (21) est conçu sous la forme d'un ressort à bras prévu d'un côté ou des deux côtés du crochet (21) entre celui-ci et le clip de retenue (12) sur le boulon (24) les traversant, et qu'il s'appuie avec respectivement un bras (28, 29) sur le clip de retenue (12) et sur le crochet (21) au moyen d'embouts en prise dans ceux-ci.

10. Dispositif d'accroche d'après une ou plusieurs des revendications 1 à 9,
**caractérisé en ce que**
sur le côté éloigné du sac (2), l'élément de traction (22) formé par exemple par une bande est articulé sur la partie extérieure du crochet (21; 41; 51).

11. Dispositif d'accroche d'après une ou plusieurs des revendications 1 à 10,
**caractérisé en ce que**
le crochet (21) a une section en U avec deux bras parallèles (13; 32) à peu près de même longueur.

12. Dispositif d'accroche d'après une ou plusieurs des revendications 1 à 10,
**caractérisé en ce que**
le crochet (41; 51) est conçu sous la forme d'une pièce angulaire (42; 52) à deux bras dont la surface intérieure donnant sur la barre (1) est adaptée en tant que surface de portée (43; 53) à sa surface d'enveloppe extérieure.

13. Dispositif d'accroche d'après la revendication 12,
**caractérisé en ce que**
le crochet (51) se laisse verrouiller en position fermée.

14. Dispositif d'accroche d'après la revendication 13,
**caractérisé en ce que**
le crochet (51) se laisse verrouiller au moyen d'un crochet d'arrêt (61) ou d'un cliquet (64) articulé dans le clip de retenue (12), qui saisit un des bras (54 ou 55) du crochet (51), et que le crochet (61) ou le cliquet (64) se laissent ajuster au moyen d'un élément de traction (63 ou 66) articulé sur ceux-ci.

15. Dispositif d'accroche d'après la revendication 13,
**caractérisé en ce que**
le crochet (51) se laisse verrouiller au moyen d'un tiroir (67) guidé de manière réglable contre la force d'un ressort (68) dans le clip de retenue (12), et qui s'engrène dans une gorge (69) pratiquée dans le crochet (51).

16. Dispositif d'accroche d'après une ou plusieurs des revendications 1 à 3,
**caractérisé en ce que**
lé crochet (103) est formé par une plaque (104) articulée sur le clip de retenue (102) et qui, moyennant un élément de traction (22) se laisse pivoter autour d'un boulon (105) disposé perpendiculairement à la barre (1), et qui comporte deux saillies (106, 107) saisissant la barre (1).

17. Dispositif d'accroche d'après la revendication 16,
**caractérisé en ce que**
sur la face frontale donnant sur le clip de retenue (102), la plaque (104) comporte au moins un embout (108) p. ex. sous la forme d'un goujon qui s'engrène dans une gorge de guidage (109) pratiquée dans le clip de retenue (102) et disposée concentriquement par rapport à l'axe de pivotement (A').
